# EUROPEAN PATENT APPLICATION

(11) **EP 4 568 267 A1**
(43) Date of publication of application: **11.06.2025**
(21) Application number: 24217945.5
(22) Date of filing: 06.12.2024
(51) Int. Cl.: H04N 25/673, H04N 25/771, H04N 25/532

(54) **LEAKAGE CORRECTION DEVICE AND IMAGE SENSOR**

(30) Priority: 06.12.2023 KR 20230175452; 02.07.2024 KR 20240086554
(71) Applicant: LX Semicon Co., Ltd., Daejeon 34027 (KR)
(72) Inventor: JANG, Hoon, 34027 Daejeon (KR)
(74) Representative: Goddar, Heinz J.

(57) **Abstract**

A leakage compensation device may include a pixel array and a plurality of detection circuits.

The pixel array may include a plurality of row lines, each of which includes a plurality of pixel circuits. The pixel array may store electric signals corresponding to light in the plurality of pixel circuits during a capture section, and may sequentially output the stored electric signals for each row line whenever a preset time elapses for each row line during an output section.

The plurality of detection circuits may detect leakage signals for compensating the outputted electric signals.

## Description

### [TECHNICAL FIELD]

The embodiment relates to a leakage correction device and an image sensor.

### [RELATED ART]

An image sensor recognizes (or detects) a location or movement based on a distance from an object, and is widely used in all industrial fields.

An image sensor sequentially outputs electric signals for each row and line. In this case, there is a problem that the leakage amount increases as the output signal is output later, and the detection performance for an object deteriorates.

### [TECHNICAL PROBLEM]

An object of the embodiment is to solve the above-mentioned problems and other problems.

Another object of the embodiment is to provide a leakage correction device and an image sensor that can improve the detection performance for an object.

The technical problems of the embodiment are not limited to those described in this item, and include those that can be understood through the description of the invention.

### [TECHNICAL SOLUTION]

According to one aspect of the embodiment to achieve the above or other purposes, the leakage compensation device may include a pixel array including a plurality of row lines each including a plurality of pixel circuits, configured to store electric signals corresponding to light in the plurality of pixel circuits during a capture section, and sequentially output the stored electric signals by row line whenever a preset time elapses for each row line during an output section; and a plurality of detection circuits configured to detect leakage signals for compensating the outputted electric signals.

The pixel circuit may include a photodetector configured to detect the light; and an output circuit configured to store and output the electric signal corresponding to the detected light.

The detection circuit may have the same circuit structure as the circuit structure of the output circuit.

Each of the outputted electric signals may be a value reduced by the value leaked during the preset time from each of the stored electric signals.

The leakage signal may be the same as the leaked value.

The electric signal and the leakage signal may be output simultaneously or differently.

The detection circuit may be positioned within the pixel circuit.

The detection circuit may be positioned corresponding to the pixel circuit.

The leakage compensation device may further include a readout line commonly connected to the pixel circuit and the detection circuit.

The detection circuit may be arranged adjacent to the at least two or more pixel circuits to detect a leakage signal of each of the at least two or more pixel circuits.

The leakage compensation device may further include a first readout line commonly connected to the at least two pixel circuits; and a second readout line connected to the detection circuit.

The leakage compensation device may include at least one dummy pixel area around the pixel array; and the detection circuit may be provided at at least one position of the at least one dummy pixel area.

According to another aspect of the embodiment to achieve the above or other purposes, an image sensor may include a pixel array including a plurality of row lines each including a plurality of pixel circuits, configured to store electric signals corresponding to light in the plurality of pixel circuits during a capture section, and sequentially output the stored electric signals by row line whenever a preset time elapses for each row line during an output section; and a plurality of detection circuits configured to detect leakage signals from the electric signals of the pixel circuit.

The image sensor may further include a correction circuit configured to correct the outputted electric signals using the leakage signals.

An output timing of the electric signal of the pixel circuit and the leakage signal of the detection circuit may be different each other.

The image sensor may further include a correction circuit configured to correct the electric signals outputted from the pixel circuits based on the leakage signals that are leaked differently at different preset times.

The image sensor may further include a readout line that is commonly connected to the pixel circuit and the detection circuit.

The two or more pixel circuits may sequentially output electric signals through the first readout line using time division, respectively.

The detection circuit may be configured to sequentially output a leakage signal through a second readout line as many as the number of pixel circuits by using using time division.

The image sensor may include at least one dummy pixel area around the pixel array.

The pixel circuit may correct the electric signals by using detection signals detected by the detection circuits located in the at least one dummy pixel area.

The correction circuit may be configured to perform an operation of adding the leakage data to each sensing data, and obtain the original sensing data.

### [EFFECT OF THE INVENTION]

The effects of the leakage compensation device and the image sensor according to the embodiment are described as follows.

According to at least one of the embodiments, the electric signals output from the pixel circuits are compensated based on the leakage signals that are leaked differently at different preset times, so that the detection performance for the object can be improved.

According to at least one of the embodiments, the leakage signal that is the same as the value leaked from the electric signal of the pixel circuit in the detection circuit can be compensated based on the leakage signal. Accordingly, the original electric signal before leakage is obtained, so that the loss of image data is prevented, so that the detection performance for the object can be improved.

### [BRIEF DESCRIPTION OF THE DRAWINGS]

FIG. 1 illustrates a leakage compensation device according to the first embodiment.
FIG. 2 is a circuit diagram illustrating the pixel circuit of FIG. 1.
FIG. 3 is a circuit diagram illustrating the detection circuit of FIG. 1.
FIG. 4 illustrates the appearance of an image sensor of a global shutter method in which electric signals are sequentially output for each row line.
FIG. 5 is a waveform diagram for the operation of a leakage compensation device according to the first embodiment.
FIG. 6 illustrates a leakage compensation device according to the second embodiment.
FIG. 7 is a waveform diagram for the operation of a leakage compensation device according to the second embodiment.
FIG. 8 illustrates a leakage compensation device according to the third embodiment.
FIG. 9 illustrates a leakage compensation device according to the fourth embodiment.
FIG. 10 illustrates a leakage compensation device according to the fifth embodiment.
FIG. 11 illustrates an image sensor according to the embodiment.

The sizes, shapes, numbers, etc. of the components shown in the drawings may differ from the actual ones. In addition, even if the same components are depicted in different sizes, shapes, and values between drawings, this is only an example in the drawings, and the same components may have the same sizes, shapes, and values between drawings.

### [DETAILED DESCRIPTION]

Hereinafter, the embodiments disclosed in this specification will be described in detail with reference to the attached drawings. Regardless of the drawing symbols, identical or similar components will be given the same reference numbers and redundant descriptions thereof will be omitted. The suffixes 'module' and 'part' used for components in the following description are given or used interchangeably in consideration of the ease of writing the specification, and do not have distinct meanings or roles in themselves. In addition, the attached drawings are intended to facilitate easy understanding of the embodiments disclosed in this specification, and the technical ideas disclosed in this specification are not limited by the attached drawings. In addition, when an element such as a layer, region, or substrate is mentioned as existing 'on' another element, this includes that it may be directly on the other element or that other intermediate elements may exist between them.

### [First Embodiment]

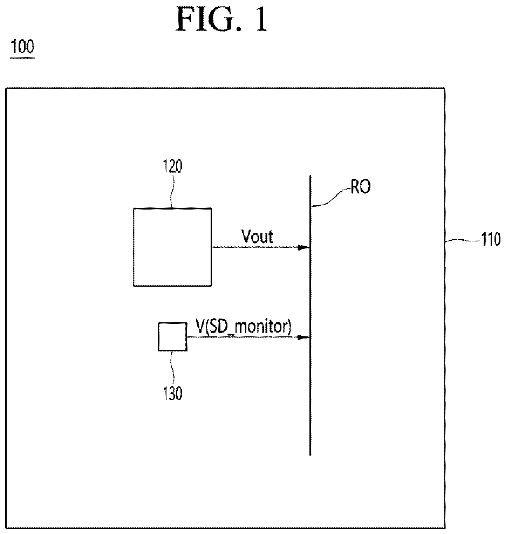

FIG. 1 illustrates a leakage compensation device according to a first embodiment.

The leakage compensation device 100 according to the first embodiment may include a pixel array 110, a detection circuit 130, etc.

The pixel array 110 may include M pixel circuits 120. The M pixel circuits 120 may be arranged in a matrix form, for example, but are not limited thereto.

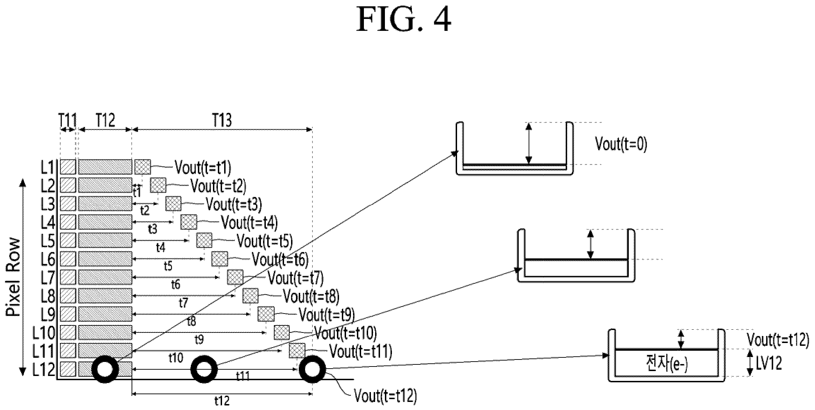

As illustrated in FIG. 4, the pixel array 110 may include a plurality of row lines (L1 to L12). Each of the row lines (L1 to L12) may include N (N<M) or more pixel circuits.

Meanwhile, the leakage compensation device 100 according to the first embodiment may be operated as an image sensor of a global shutter method. As shown in FIG. 4, the image sensor of the global shutter method may include a reset section (T11), a capture section (T12), an output section (T13), etc. The reset section (T11) may be called an initialization section, the capture section (T12) may be called a storage section, and the output section (T13) may be called a readout section.

During the reset section (T11), M pixel circuits 120 may be reset. During the capture section (T12), electric signals (Vout(t=t1) to Vout(t=t12)) corresponding to light may be stored in the M pixel circuits 120. That is, an image of an object may be obtained during the capture section (T12). The electric signals (Vout(t=t1) to Vout(t=t12)) may be a current, a voltage, a potential, etc.

During the output section (T13), the electric signals (Vout(t=t1) to Vout(t=t12)) stored in the M pixel circuits 120 may be sequentially output for each row line (L1 to L12). As shown in FIG. 4, during the output section (T13), the electric signals (Vour(t-t1) to Vout(t=t12)) stored in the N pixel circuits 120 of each of the first to twelfth row lines (L1 to L12) may be output in the order of the first row line (L1), the second row line (L2), the third row line (L3), ..., the twelfth row line (L12). During the output section (T13), the M electric signals (Vout(t=t1) to Vout(t=t12)) consisting of an image of one frame may be output.

Since a readout line is commonly connected to the pixel circuits 120 on the column lines, the pixel circuits 120 on the column lines can be driven by time division during the output section (T13). That is, during the output section (T13), the electric signals (Vout(t=t1) to Vout(t=t12)) stored in the N pixel circuits 120 included in each of the first to twelfth row lines (L1 to L12) can be output whenever a preset time elapses. For example, the electric signals (Vout(t=t1) to Vout(t=t12)) stored in the N pixel circuits 120 of the first row line (L1) can be output when a first time elapses, and the electric signals (Vout(t=t1) to Vout(t=t12)) stored in the N pixel circuits 120 of the second row line (L2) can be output when a second time elapses. The electric signals (Vout(t=t1) to Vout(t=t12)) stored in the N pixel circuits 120 of each of the remaining row lines (L3 to L12) can be output when the third to twelfth times elapse.

Meanwhile, the detection circuit 130 can detect (or obtain) leakage signals (V(SD_monitor)) for compensating the output electric signals (Vout(t=t1) to Vout(t=t12)). The leakage signal (V(SD_monitor)) can be a current, a voltage, a potential, etc. formed by leaked charges, for example, electrons.

The detection circuit 130 can be provided in the pixel array 110. The detection circuit 130 can be positioned corresponding to each of the plurality of pixel circuits 120. For example, if the pixel array 110 is equipped with one million pixel circuits 120, one million detection circuits 130 may also be equipped in the pixel array 110 corresponding to each of the one million pixel circuits 120.

As will be described later, since the electric signals output from the pixel circuits are compensated based on the leakage signals that leak differently at different preset times, the output electric signals (Vout) are compensated for with the original electric signals using the leakage signals, so that the detection performance for the object can be improved.

Meanwhile, the pixel circuit 120 and the detection circuit 130 may be commonly connected to the readout line (RO). In this case, the electric signal (Vout) of the pixel circuit 120 may be output through the readout line (RO) using time division, and then the leakage signal of the detection circuit 130 may be output through the readout line (RO). The opposite operation may also be performed.

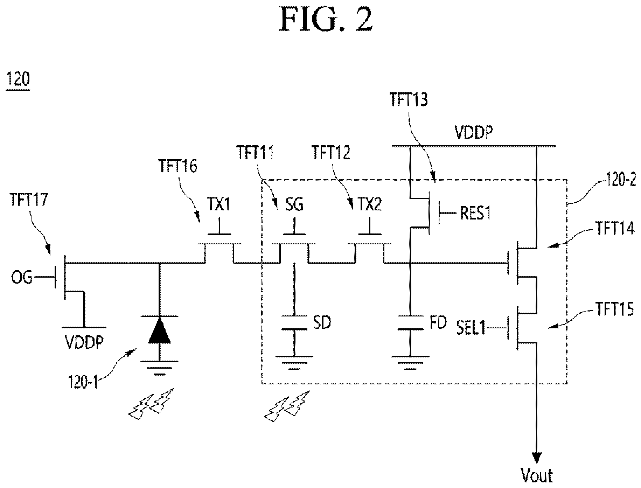

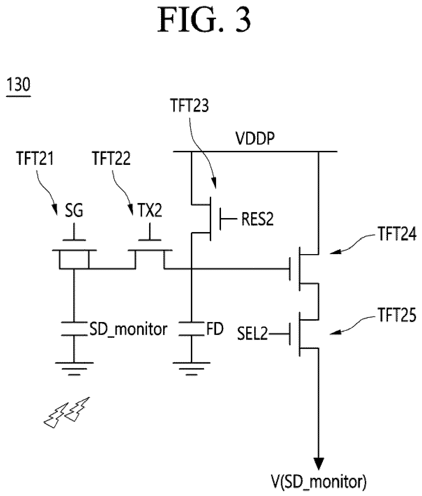

Referring to FIGS. 2 and 3, the pixel circuit 120 and the detection circuit 130 will be described in detail.

As shown in FIG. 2, the pixel circuit 120 may include a photodetector 120-1, an output circuit 120-2, etc.

The photodetector 120-1 may detect light and obtain an electric signal corresponding to the light. The photodetector 120-1 may be configured as a semiconductor light emitting diode.

Although five transistors are shown in the output circuit 120-2 in FIG. 2, fewer or more transistors may be provided.

The output circuit 120-2 may include a first transistor (TFT11), a second transistor (TFT12), a third transistor (TFT13), a fourth transistor (TFT14), and a fifth transistor (TFT15). For example, the first transistor (TFT11) may be called a storage transistor, the second transistor (TFT12) may be called a transmission transistor, and the third transistor (TFT13) may be called a reset transistor. The fourth transistor (TFT14) may be called a driving transistor, and the fifth transistor (TFT15) may be called a selection transistor.

The first transistor (TFT11) may be connected to a photodetector 120-1 and may store an electric signal obtained from the photodetector 120-1 in the storage capacitor (SD).

The second transistor (TFT12) may be connected to the first transistor (TFT11) and may transmit and store an electric signal stored in the storage capacitor (SD) to the floating diffusion (FD).

The third transistor (TFT13) may reset a node between the second transistor (TFT12) and the fourth transistor (TFT14).

The fourth transistor (TFT14) can output an electric signal stored in a floating diffusion (FD). The fourth transistor (TFT14) can operate as a source-follower amplifier, but is not limited thereto.

The fifth transistor (TFT15) is connected between the fourth transistor (TFT14) and the readout line (RO), and can output an electric signal (Vout) passing through the driving transistor to the readout line (RO).

Meanwhile, the pixel circuit 120 may further include a sixth transistor, a seventh transistor, etc.

The sixth transistor is connected between the photodetector 120-1 and the first transistor (TFT11), and can transmit and store an electric signal obtained from the photodetector 120-1 to a storage capacitor (SD). The sixth transistor may be called a transmission transistor.

The seventh transistor may be commonly connected to the M pixel circuits 120 of the pixel array 110 and may reset the M pixel circuits 120. For example, the seventh transistor may be provided in each of the M pixel circuits 120. For example, the seventh transistor may be provided outside the M pixel circuits 120 and may be commonly connected to the M pixel circuits 120.

As shown in FIGS. 2 and 3, the detection circuit 130 may have the same circuit structure as the circuit structure of the output circuit 120-2.

The detection circuit 130 may detect a leakage signal (V(SD_monitor)). As described above, since the circuit structure of the detection circuit 130 is the same as that of the output circuit 120-2, the leakage signal (V(SD_monitor)) may be the same as the value leaked from the electric signal of the output circuit 120-2.

Although five transistors are illustrated in the detection circuit 130 in FIG. 3, fewer or more transistors may be provided.

The detection circuit 130 may include a first transistor (TFT21), a second transistor (TFT22), a third transistor (TFT23), a fourth transistor (TFT24), and a fifth transistor (TFT25). For example, the first transistor (TFT21) may be called a monitoring transistor, the second transistor (TFT22) may be called a transmission transistor, and the third transistor (TFT23) may be called a reset transistor. The fourth transistor (TFT24) may be called a driving transistor, and the fifth transistor (TFT25) may be called a selection transistor.

The first transistor (TFT21) may monitor a leakage signal (V(SD_monitor)) for a preset section of time and store it in a storage capacitor (SD_monitor).

The second transistor (TFT22) may be connected to the first transistor (TFT21) and may transmit and store the leakage signal (V(SD_monitor)) stored in the monitoring storage capacitor (SD_monitor) to a floating diffusion (FD).

The third transistor (TFT23) may reset a node between the second transistor (TFT22) and the fourth transistor (TFT24).

The fourth transistor (TFT24) may output the leakage signal (V(SD_monitor)) stored in the floating diffusion (FD). The fourth transistor (TFT24) can be operated as a source-follower amplifier, but is not limited thereto.

The fifth transistor (TFT25) is connected between the fourth transistor (TFT24) and the readout line (RO), and can output a leakage signal (V(SD_monitor)) via the driving transistor to the readout line (RO).

Meanwhile, unlike FIG. 3, the first transistor (TFT21) is omitted, and the storage capacitor (SD_monitor) can be directly connected to the second transistor (TFT22). In this case, the leakage signal (V(SD_monitor)) stored in the storage capacitor (SD_monitor) can be transmitted to the floating diffusion (FD) via the second transistor (TFT22).

The operation of the leakage compensation device is explained with reference to FIGS. 1 to 5.

As shown in FIG. 4, it can be operated by dividing into a reset section (T11), a capture section (T12), and an output section (T13). The reset section (T11), the capture section (T12), and the output section (T13) can be defined as one cycle. This cycle can correspond to one frame or be a part of one frame.

### <Reset section (T11)>

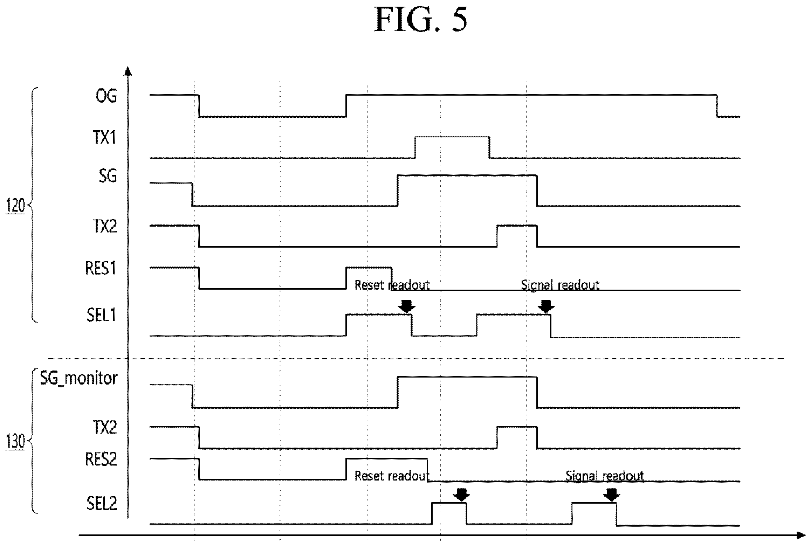

As shown in FIGS. 4 and 5, during the reset section (T11), M pixel circuits 120 can be reset. For example, the seventh transistor can be turned on by the overflow drain signal (OG), and M pixel circuits 120 of the pixel array 110 can be reset.

### <Capture section (T12)>

As shown in FIG. 4 and FIG. 5, during the capture section (T12), electric signals corresponding to light (Vout (t=t1) to Vout (t=t12)) are stored in M pixel circuits 120, so that an image of an object can be obtained.

During the capture section (T12), the third transistor (TFT13) of the pixel circuit 120 and the third transistor (TFT23) of the detection circuit 130 are turned on by the first reset signal (RES1) and the second reset signal (RES2), respectively, so that the node of the pixel circuit 120 and the node of the detection circuit 130 can be reset. In FIG. 1, since the pixel circuit 120 and the detection circuit 130 are connected to the same readout line (RO), the node of the pixel circuit 120 and the node of the detection circuit 130 may be reset at different times. That is, after the fifth transistor (TFT15) is turned on by the first selection signal in the pixel circuit 120 and the node is reset through the readout line (RO), the fifth transistor (TFT25) may be turned on by the second selection circuit in the detection circuit 130 and the node may be reset through the readout line (RO).

Meanwhile, in the pixel circuit 120, the sixth transistor and the first transistor (TFT11) may be turned on by the first transmission signal (TX1) and the storage gate signal (SG), respectively, so that an electric signal corresponding to light detected by the photodetector 120-1 may be stored in the storage capacitor (SD). In the detection circuit 130, the leakage signal (V(SD_monitor)) may be stored in the storage capacitor (SD_monitor) by the storage monitoring gate signal (SG_monitor).

Afterwards, in the pixel circuit 120, the second transistor (TFT12) is turned on by the second transmission signal (TX2), so that the electric signal stored in the storage capacitor (SD) may be transmitted and stored in the floating diffusion (FD). In the detection circuit 130, the second transistor (TFT22) is turned on by the transmission signal (TX2), so that the leakage signal (V(SD_monitor)) stored in the storage capacitor (SD_monitor) may be transmitted and stored in the floating diffusion (FD).

### <Output section (T13)>

As shown in FIG. 4 and FIG. 5, during the output section (T13), the electric signals (Vout (t=t1) to Vout (t=t12)) stored in the M pixel circuits 120 can be sequentially output for each row line (L1 to L12).

In FIG. 1, since the pixel circuit 120 and the detection circuit 130 are connected to the same readout line (RO), the output timing of the electric signal (Vout) of the pixel circuit 120 and the leakage signal (V (SD_monitor)) of the detection circuit 130 can be different. That is, in the pixel circuit 120, the fifth transistor (TFT15) is turned on by the first selection signal, and the electric signal (Vout) stored in the floating diffusion (FD) is output through the readout line (RO), and then in the detection circuit 130, the fifth transistor (TFT25) is turned on by the second selection circuit, and the leakage signal (V(SD_monitor)) stored in the floating diffusion (FD) can be output through the readout line (RO).

As described above, as shown in FIGS. 2 and 3, since the pixel circuit 120 and the detection circuit 130 are commonly connected to the same readout line (RO), the electric signal (Vout) and the leakage signal (V(SD_monitor)) can be output (or obtained) at different times. That is, as illustrated in 5, the electric signal (Vout) stored in the pixel circuit 120 may be output first, and then the leakage signal (V(SD_monitor)) stored in the detection circuit 130 may be output.

Meanwhile, the time at which the electric signal is stored and then output in each pixel circuit 120 may be determined by a preset time. As shown in FIG. 4, the preset times (t1 to t12) may be different for each row line (L1 to L12). Accordingly, the leakage value in the corresponding electric signal (Vout(t=t1) to Vout(t=t12)) may be different for each row line (L1 to L12). For example, the longer the preset time (t1 to t12), the more different the leakage value in the corresponding electric signal (Vout(t=t1) to Vout(t=t12)) may be.

The electric signal (Vout(t=t1) to Vout(t=t12)) output from the pixel circuit 120 at a preset time (t1 to t12) may be a value reduced by the value leaked during the preset time (t1 to t12) from the electric signal stored in the floating diffusion (FD). That is, the electric signal stored in the floating diffusion may be reduced by the value leaked during the preset time (t1 to t12) and output through the readout line (RO). For example, as shown in FIG. 4, among the N pixel circuits 120 on the 12th row line (L12), the first pixel circuit may be stored as an electric signal during the capture section (T12). The electric signal stored in the first pixel circuit may be reduced by the leaked value (LV12) during the first time (t12). Accordingly, the electric signal stored in the first pixel circuit can be output to the readout line (RO) as a value reduced by [Vout(t=0) - LV12] when the first time (t12) elapses.

For example, the electric signals (Vout(t=t5)) output from the N pixel circuits 120 on the fifth row line (L5) can have a larger leakage amount than the electric signals (Vout(t=t1)) output from the N pixel circuits 120 on the first row line (L1). For example, the electric signals (Vout(t=t12)) output from the N pixel circuits 120 on the twelfth row line (L12) can have a larger leakage amount than the electric signals (Vout(t=t7)) output from the N pixel circuits 120 on the seventh row line (L7).

According to an embodiment, by detecting a leakage signal (V(SD_monitor)) that is equal to a value leaked from an electric signal of a pixel circuit 120 in a detection circuit 130, an electric signal (Vout) output from a pixel circuit 120 can be compensated based on the leakage signal (V(SD_monitor)). Accordingly, an original electric signal before leakage is obtained, so that loss of image data is prevented, and detection performance for an object can be improved.

### [Second embodiment]

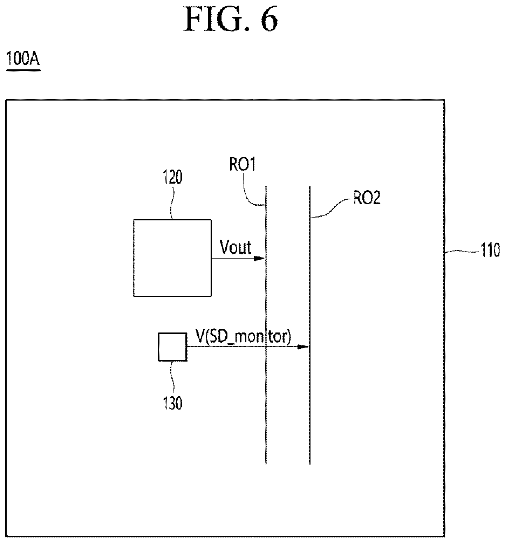

FIG. 6 illustrates a leakage compensation device according to the second embodiment.

The second embodiment is the same as the first embodiment except that the pixel circuit 120 and the detection circuit 130 are independently connected to the first readout line (RO1) and the second readout line (RO2), respectively. In the second embodiment, the same drawing reference numerals are given to components having the same structure or function as those of the first embodiment, and detailed descriptions are omitted.

Referring to FIG. 6, the leakage compensation device 100A according to the second embodiment may include a pixel array 110, a detection circuit 130, etc.

The pixel array 110 may include M pixel circuits 120. A detection circuit 130 may be provided corresponding to each of the M pixel circuits 120. That is, the M detection circuits 130 may be provided. In this case, the pixel circuit 120 may be connected to the first readout line (RO1), and the detection circuit 130 may be connected to the second readout line (RO2). In this way, since the pixel circuit 120 and the detection circuit 130 are connected to different readout lines (RO1, RO2), the electric signal (Vout) stored in the pixel circuit 120 and the leakage signal (V(SD_monitor)) stored in the detection circuit 130 may be individually output. For example, the electric signal (Vout) and the leakage signal (V(SD_monitor)) may be output simultaneously or differently.

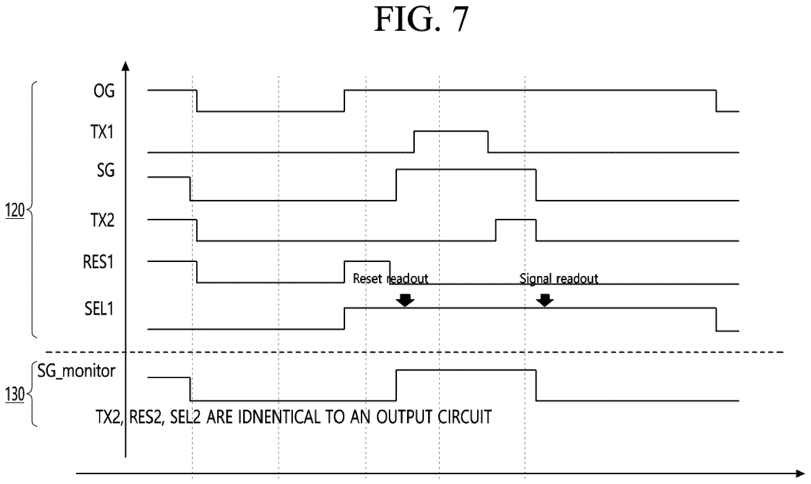

As illustrated in FIG. 2 and FIG. 7, the fifth transistor (TFT15) of the pixel circuit 120 and the fifth transistor (TFT25) of the detection circuit 130 are turned on at the same time by the first selection signal and the second selection signal, respectively, so that the electric signal (Vout) stored in the pixel circuit 120 and the leakage signal (V(SD_monitor)) stored in the detection circuit 130 can be simultaneously output through the first readout line (RO1) and the second readout line (RO2), respectively.

### [Third Embodiment]

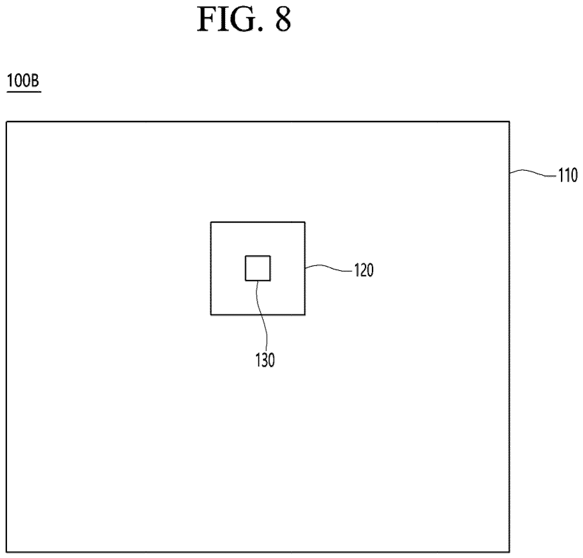

FIG. 8 illustrates a leakage compensation device according to the third embodiment.

The third embodiment is the same as the first embodiment and/or the second embodiment, except that the detection circuit 130 is located within the pixel circuit 120. In the third embodiment, the same drawing reference numerals are given to components having the same structure or function as those of the first embodiment and/or the second embodiment, and detailed descriptions are omitted.

Referring to FIG. 8, a leakage compensation device 100B according to the third embodiment may include a pixel array 110, a detection circuit 130, etc.

The pixel array 110 may include M pixel circuits 120. A detection circuit 130 may be provided corresponding to each of the M pixel circuits 120. That is, M detection circuits 130 may be provided.

The detection circuit 130 may be located within the pixel circuit 120. For example, the detection circuit 130 may be physically located within the pixel circuit 120 or may be circuitically included within the pixel circuit 120. For example, the detection circuit 130 illustrated in FIG. 3 may be included in the pixel circuit 120 illustrated in FIG. 2. In this case, the detection circuit 130 may be located within the area where the pixel circuit 120 is formed. For example, the pixel circuit 120 and the detection circuit 130 may be commonly connected to a line that shares a power supply (VDDP).

### [Fourth Embodiment]

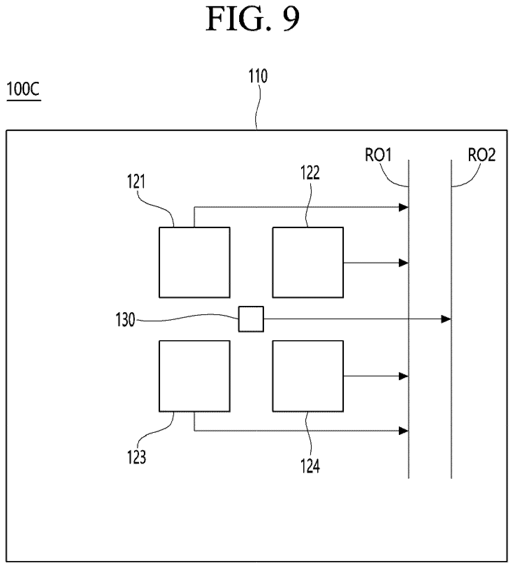

FIG. 9 illustrates a leakage compensation device according to the fourth embodiment.

The fourth embodiment is similar to the first to third embodiments except that the detection circuit 130 is arranged adjacent to at least two or more pixel circuits 121 to 124. In the fourth embodiment, the same drawing reference numerals are given to components having the same structure or function as those of the first to third embodiments, and detailed descriptions are omitted.

Referring to FIG. 9, the leakage compensation device 100C according to the fourth embodiment may include a pixel array 110, a detection circuit 130, etc.

The pixel array 110 may include M pixel circuits 120. The detection circuit 130 may be arranged adjacent to at least two pixel circuits 121 to 124. For example, the detection circuit 130 may be surrounded by at least two pixel circuits 121 to 124, but is not limited thereto.

For example, the detection circuit 130 may be surrounded by four pixel circuits 121 to 124, but is not limited thereto. The detection circuit 130 may be located in a central region of an area composed of four pixel circuits 121 to 124.

Four pixel circuits 121 to 124 may be connected to the first readout line (RO1), and the detection circuit 130 may be connected to the second readout line (RO2).

For example, the four pixel circuits 121 to 124 may sequentially output electric signals through the first readout line (RO1) using time division.

For example, the detection circuit 130 may sequentially output a leakage signal through the second readout line (RO2) as many times as the number of pixel circuits 121 to 124 using time division.

For example, the detection signal may output the first leakage signal when the electric signal of the first pixel circuit 121 is output. The first leakage signal may be the same as the value leaked from the electric signal of the first pixel circuit 121. For example, the detection signal may output a second leakage signal when the electric signal of the second pixel circuit 122 is output. The second leakage signal may be the same as the value leaked from the electric signal of the second pixel circuit 122. For example, the detection signal may output a third leakage signal when the electric signal of the third pixel circuit 123 is output. The third leakage signal may be the same as the value leaked from the electric signal of the third pixel circuit 123. For example, the detection signal may output a fourth leakage signal when the electric signal of the fourth pixel circuit 124 is output. The fourth leakage signal may be the same as the value leaked from the electric signal of the fourth pixel circuit 124.

Although not shown, four pixel circuits 121 to 124 and the detection circuit 130 may be commonly connected to the same readout line.

### [Fifth Embodiment]

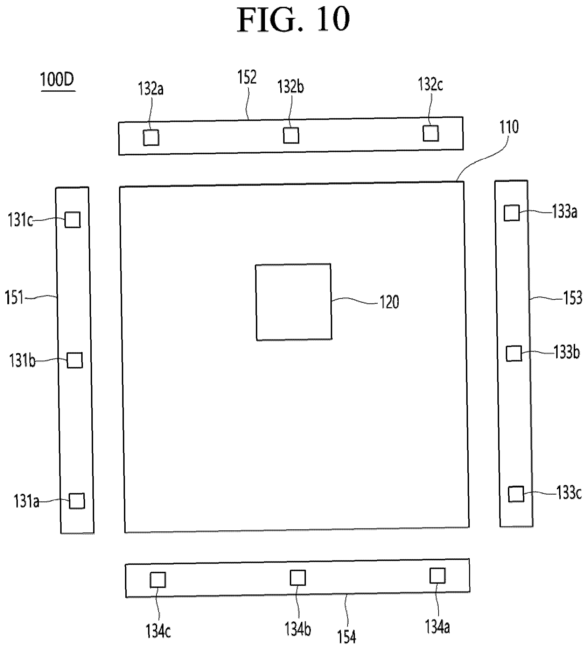

FIG. 10 illustrates a leakage compensation device according to a fifth embodiment.

The fifth embodiment is similar to the first to third embodiments except that the detection circuit 130 is located around the pixel array 110. In the fourth embodiment, the same reference numerals are given to components having the same structure or function as those of the first to fourth embodiments, and detailed descriptions are omitted.

Referring to FIG. 10, the leakage compensation device 100D according to the fifth embodiment may include a pixel array 110, a detection circuit 130, etc.

The pixel array 110 may include M pixel circuits 120. The detection circuit 130 may be located around the pixel array 110.

At least one dummy pixel region 151 to 154 may be positioned around the pixel array 110. The dummy pixel region 151 to 154 may include a plurality of pixel circuits, but the pixel circuits may not operate.

For example, four dummy pixel regions 151 to 154 may be positioned around the pixel array 110.

Meanwhile, in an embodiment, the detection circuit 130 may be provided at at least one location of at least one dummy pixel region 151 to 154.

For example, two detection circuits 130 (131a to 131c, 132a to 132c, 133a to 133c, 134a to 134c) may be positioned in each of four dummy pixel regions (151 to 154).

The electric signals of the N pixel circuits of the row line can be corrected using the detection signals detected by the detection circuits 130 (131a to 131c, 132a to 132c, 133a to 133c, 134a to 134c) positioned in each of four dummy pixel regions (151 to 154). For example, the electric signals of the N pixel circuits of the row line may be corrected using the detection signals using an interpolation method.

Although not shown, two detection circuits 130 (132a to 132c, 1341, 134b) may be positioned in each of the second dummy pixel area 152 and the fourth dummy pixel area 154, and no detection circuit 130 may be positioned in the first dummy pixel area 151 and the third dummy pixel area 153.

Although not shown, two detection circuits 130 (131a to 131c, 1331, 133b) may be positioned in each of the first dummy pixel area 151 and the third dummy pixel area 153, and no detection circuit 130 may be positioned in the second dummy pixel area 152 and the fourth dummy pixel area 154.

Although not shown, the detection circuits 130 may be located only in one of the first dummy pixel area 151 and the third dummy pixel area 153.

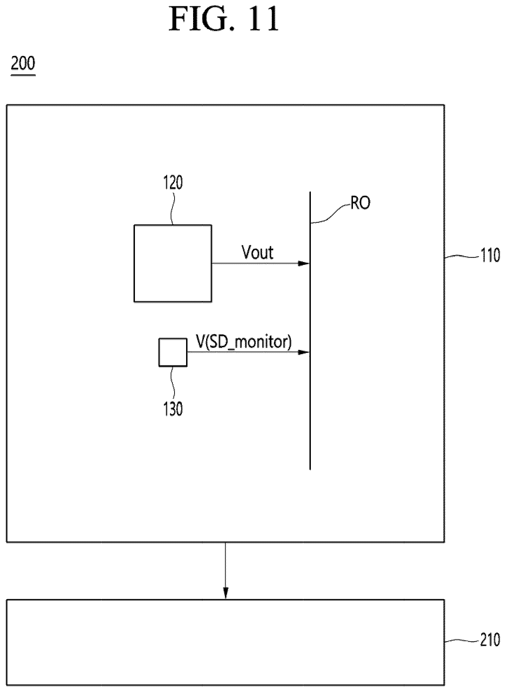

FIG. 11 illustrates an image sensor according to an embodiment. Although the leakage compensation device according to the first embodiment (FIGS. 1 to 5) is illustrated in the drawing, the leakage compensation device according to the second to fifth embodiments (FIGS. 6, 8 to 10) may also be included in the image sensor according to the embodiment.

Referring to FIG. 11, the image sensor 200 according to the embodiment may include a pixel array 110, a detection circuit 130, a correction circuit 210, etc.

Since the pixel array 110 and the detection circuit 130 have been described in the first embodiment (FIG. 1), a detailed description thereof will be omitted.

Each of the M pixel circuits 120 included in the pixel array 110 may include a photodetector 120-1 and an output circuit 120-2.

The correction circuit 210 may correct the electric signals (Vout) output from the plurality of pixel circuits 120 using the leakage signals (V(SD_monitor)) output from the detection circuit 130.

As illustrated in FIG. 4, the electric signals (Vout(t=t1) to Vout(t=t12)) of the pixel circuits 120 on the row lines (L1 to L12) may be sequentially output for each row line (L1 to L12) whenever a preset time (t1 to t12) elapses for each row line (L1 to L12). Accordingly, the electric signals (Vout(t=t1) to Vout(t=t12)) output by row line (L1 to L12) can be reduced by the value leaked during the preset time (t1 to t12).

The detection circuit 130 may have the same circuit structure as the circuit structure of the output circuit 120-2. Accordingly, the leakage signal (V(SD_monitor)) detected by the detection circuit 130 may be the same as the value leaked during the preset time (t1 to t12) in the electric signal of the corresponding pixel circuit 120.

Referring again to FIG. 11, the correction circuit 210 may convert the electric signals (Vout) into digital signals to obtain sensing data. The correction circuit 210 may convert the leakage signals (V(SD_monitor)) into digital signals to obtain leakage data.

The correction circuit 210 can obtain original sensing data by performing an operation of adding the leakage data to each sensing data. The original sensing data may be data on electric signals before leakage.

According to the embodiment, the original sensing data corrected using the leakage data does not have a loss due to the leakage, so that an accurate image of the object can be obtained using the original sensing data, thereby improving the detection performance of the object.

The above detailed description should not be construed as limiting in all aspects and should be considered as illustrative. The scope of the embodiment should be determined by a reasonable interpretation of the appended claims, and all changes within the equivalent scope of the embodiment are included in the scope of the embodiment.

## Claims

1. A leakage compensation device comprising:
a pixel array including a plurality of row lines each including a plurality of pixel circuits, configured to store electric signals corresponding to light in the plurality of pixel circuits during a capture section, and sequentially output the stored electric signals by row line whenever a preset time elapses for each row line during an output section; and
a plurality of detection circuits configured to detect leakage signals for compensating the outputted electric signals.

2. The leakage compensation device of claim 1, wherein the pixel circuit includes:
a photodetector configured to detect the light; and
an output circuit configured to store and output the electric signal corresponding to the detected light.

3. The leakage compensation device of claim 2, wherein the detection circuit has the same circuit structure as a circuit structure of the output circuit.

4. The leakage compensation device of any one of the preceding claims, wherein each of the outputted electric signals is a value reduced by the value leaked during the preset time from each of the stored electric signals.

5. The leakage compensation device of claim 4, wherein the leakage signal is the same as the leaked value.

6. The leakage compensation device of any one of the preceding claims, wherein the electric signal and the leakage signal are output simultaneously or differently.

7. The leakage compensation device of any one of the preceding claims, wherein the detection circuit is positioned within the pixel circuit.

8. The leakage compensation device of any one of the preceding claims, wherein the detection circuit is located corresponding to the pixel circuit.

9. The leakage compensation device of claim 7, further comprises a readout line commonly connected to the pixel circuit and the detection circuit.

10. The leakage compensation device of any one of the preceding claims, wherein the detection circuit is arranged adjacent to at least two or more pixel circuits to detect a leakage signal of each of the at least two or more pixel circuits.

11. The leakage compensation device of claim 10, further comprising:
a first readout line commonly connected to the at least two pixel circuits; and
a second readout line connected to the detection circuit.

12. The leakage compensation device of any one of the preceding claims, further comprises at least one dummy pixel area around the pixel array, and
wherein the detection circuit is provided at at least one position of the at least one dummy pixel area.

13. An image sensor comprising:
a pixel array including a plurality of row lines each including a plurality of pixel circuits, configured to store electric signals corresponding to light in the plurality of pixel circuits during a capture section, and sequentially output the stored electric signals by row line whenever a preset time elapses for each row line during an output section; and
a plurality of detection circuits configured to detect leakage signals from the electric signals of the pixel circuit.

14. The image sensor of claim 13, further comprises a correction circuit configured to correct the outputted electric signals using the leakage signals.

15. The image sensor of claim 13, further comprises a correction circuit configured to correct the electric signals outputted from the pixel circuits based on the leakage signals that are leaked differently at different preset times.
